# EUROPEAN PATENT SPECIFICATION

(11) **EP 3 361 714 B1**
(45) Date of publication and mention of the grant of the patent: **27.11.2019**
(21) Application number: 18152402.6
(22) Date of filing: 27.07.2006
(51) Int. Cl.: H04M 7/00, H04L 29/06, H04M 7/12

(54) **METHOD FOR PROCESSING BEARER CONTROL**
VERFAHREN ZUR VERARBEITUNG EINER TRÄGERSTEUERUNG
PROCÉDÉ DE TRAITEMENT D'UNE COMMANDE DE SUPPORT

(30) Priority: 31.08.2005 CN 200510093909
(43) Date of publication of application: 15.08.2018
(62) Divisional of application: 14152603.8
(73) Proprietor: HUAWEI TECHNOLOGIES CO., LTD., Guangdong 518129 (CN)
(72) Inventor: ZHU, Dongming, Shenzhen, Guangdong 518129 (CN); XU, Peili, Shenzhen, Guangdong 518129 (CN); LIN, Ming, Shenzhen, Guangdong 518129 (CN); DUAN, Xiaoqin, Shenzhen, Guangdong 518129 (CN)
(74) Representative: Pfenning, Meinig & Partner mbB

(56) References cited:
- US-A1- 2005 083 912
- ANDREASEN B FOSTER CISCO SYSTEMS F: "Media Gateway Control Protocol (MGCP) Version 1.0; rfc3435.txt", IETF STANDARD, INTERNET ENGINEERING TASK FORCE, IETF, CH, 1 January 2003 (2003-01-01), XP015009218, ISSN: 0000-0003

## Description

### Field of the Invention

The present invention relates to bearer control technologies in communication field, and more particularly, to a method for processing bearer control.

### Background of the Invention

Beginning from the 3rd Generation Partnership Project (3GPP) Release 5, Core Network of Universal Mobile Telecommunications System (UMTS) has been divided into Circuit Switched (CS) Domain, Packet Switched (PS) Domain, and IP Multimedia Subsystem (IMS), wherein;

The CS domain is used for providing connections of circuit switched services for the subscribers; the PS domain is used for providing connections of packet switched services for the subscribers; and the IMS is a subsystem introduced on the basis of the existing PS domain in the Wideband Code Division Multiple Access (WCDMA) network in 3GPP Release 5. The IMS employs PS domain as a bearer channel of its upper-layer control signaling and media transmission, introduces Session Initiation Protocol (SIP) as a service control protocol, and provides abundant multimedia services by separating the service control and the bearer control and utilizing the characteristics of the SIP, i.e. simple, extensible and convenient for media combination.

The IMS architecture defined by 3GPP standard comprehensively resolves the critical operability problems such as roaming charging, guarantee of quality of service (QoS) and safety, and so on, which need to be solved to provide multimedia services based on IP bearer. In addition, 3GPP has begun to study subjects such as All-IP network (AIPN) which aims to support various access technologies. A subscriber can access to the IMS via various access networks by using different access technologies with a single multimode terminal or various types of terminals according to his/her subscription, to obtain uniform multimedia services.

Under such a technical background, along with the development of IMS, the relationship between the traditional CS network and IMS network will gradually change from the simple call interworking to service convergence in different levels. During the developing process, a kind of call scenario, CS→IMS→CS, will be met frequently, that is, a call is originated from a CS network, routed to an IMS network according to the routing control of the CS network to trigger a specific service control, and then routed back to a CS network to connect the called subscriber.

In the IMS, the interworking between the IMS network and the CS network is implemented by the cooperation of the Media Gateway Control Function (MGCF) and the IMS Media Gateway (IM-MGW).

In detail, the MGCF accomplishes the interaction between the IMS core control plane and the CS network, supports the interaction and the interworking between the ISDN User Part (ISUP) protocol and SIP protocol, or between the Bearer Independent Call Control (BICC) protocol and the SIP protocol, and controls IMS Media Gateway (IM-MGW) by using H.248 protocol to accomplish the real-time conversion between the user plane data born over Time Division Multiplex (TDM) bearer in CS network and the user plane Real-time Transport Protocol (RTP) stream born over internet protocol (IP) bearer in IMS domain.

The IM-MGW accomplishes the necessary transcoding and the real-time conversion between the wideband bearer on the user plane of the IMS and narrowband bearer on the user plane of the CS network, such as the conversion between the RTP stream born over the IP bearer and the data born over the TDM bearer.

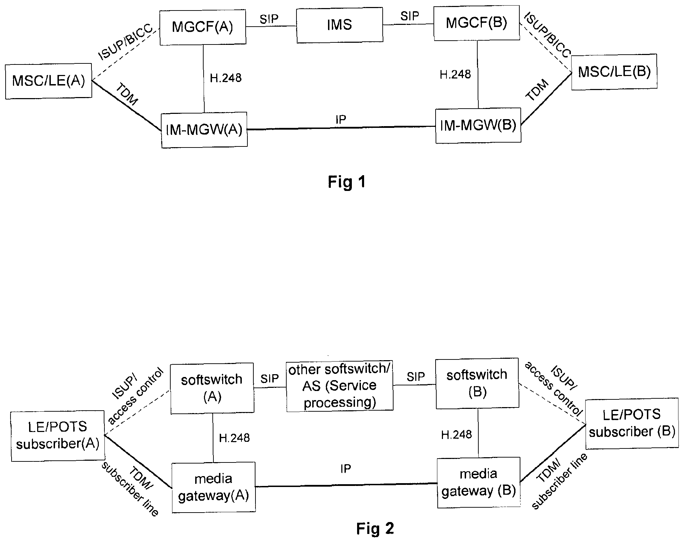

Therefore, in the case of CS → IMS → CS, processing of the IMS/CS interworking gateway (MGCF/IM-MGW) will be respectively introduced on the call segment CS→IMS and the call segment IMS→CS. When the CS employs the TDM bearer, the control plane and the user plane connection of such a CS→IMS →CS call is shown as Fig. 1.

In the following descriptions, if there is no special explanation, the CS network refers to the Public Switched Telephone Network (PSTN) and the CS domain of the Public Land Mobile Network (PLMN).

As shown in Fig.1, the control entity MGCF (A) of the IM-MGW (A) accomplishes a conversion from the ISUP/BICC protocol to the SIP protocol respectively used in the CS Mobile Switching Center (MSC) or Local Exchange (LE) (A) and the IMS control plane, and accomplishes the necessary transcoding and conversion from the TDM bearer at CS side to the IP bearer at IMS side on the user plane by controlling IM-MGW (A) with H.248 protocol; on the contrary, the control entity MGCF (B) of the IM-MGW (B) accomplishes a conversion from the SIP protocol to the ISUP/BICC protocol respectively used in the IMS control plane and CS Mobile Switching Center (MSC) or Local Exchange (LE) (B), and accomplishes the necessary transcoding and conversion from IP bearer at IMS side to TDM bearer at CS side on the user plane by controlling IM-MGW (B) with H.248 protocol.

It can be seen from Fig. 1 that the processing of RTP packing and unpacking is respectively introduced on the IMS media gateways (IM-MGW (A) and IM-MGW (B)) since there is a IP bearer segment between the two TDM bearer segments on the user plane. At the same time, the gateway (including the MGCF/IM-MGW) at the two sides may also select a codec for the IP bearer segment which is different from the original one used on the TDM bearer according to the local strategy. In this case, the IMS media gateways at the two sides further needs to perform the transcoding respectively.

The inventor finds out that in certain cases, the two gateways A and B (including MGCF/IM-MGW) may be located in one same physical entity, that is, the media stream is actually exchanged within one same physical media gateway entity.In this case, the call is viewed as two independent tandem calls on the perspective of MGCF since it is handled by the MGCF twice successively, although in fact it is one call in view of end to end. Thus although the media is finally exchanged within the same IM-MGW and the exchanged media is not actually passing an IP bearer segment, the MGCF will control the IM-MGW to exchange the media between the two IP ports allocated respectively for the IMS side of the call segment CS→IMS and the call segment IMS→CS according to the related art since the two call control instances are independent of each other on the MGCF and the correlated data can not be associated and shared. Therefore, the user plane data received in the TDM circuit of the segment CS→IMS are packed to RTP package, then exchanged between two IP ports, and subsequently unpacked from RTP package and to be sent to the TDM circuit of the segment IMS→CS. At the same time, if the media at the two sides select a codec different from the original one used on Circuit call through the media negotiation during the IMS session establishment, the above processing further includes double transcoding. In fact, the user plane data streams between the TDM circuit of the segment CS→IMS and that of the segment IMS→CS do not really leave the IM-MGW entity, so the RTP packing, the RTP unpacking and the transcoding processing are not necessary.

In other words, in the specific case described above, the existing processing method for bearer control will result in the redundant RTP packing and unpacking processing and probably additional redundant transcoding processing. It will then increase the processing burden of system and the latency of the processing, and thus has a negative influence on the service quality of the transmitted media stream.

The inventor also finds out that in a softswitch located in a mixing configured network as shown in Fig. 2, there may be similar problems. For example, the control entity of the media gateway (A), i.e. softswitch (A), receives an incoming call from a local exchange (LE) connected with a TDM circuit or an intra-office originating call originated by a Plain Ordinary Telephone Service (POTS) subscriber (A), after the route analysis or the service trigger judgment, it routes the call to another entity connected with an IP bearer (such as another softswitch or application server (AS)); after corresponding service processing such as call forwarding, the call is further routed by that entity to a softswitch (B), which is the control entity of the media gateway (B), and is then be routed by the softswitch (B) to an LE(B) connected to the softswitch (B) with a TDM circuit or a POTS subscriber (B) served by softswitch(B). In the case that the gateway (A) (including the softswitch (A) and the media gateway (A)) and the gateway (B) (including the softswitch (B) and the media gateway (B)) are located within the same physical entity (gateway(A)=gateway(B)), on this gateway, the call is similarly processed by the softswitch twice successively and separately, although in fact, the media stream is exchanged within the same media gateway administrated by the softswitch. Therefore, the above problem in the call scenario CS→IMS→CS described with reference to Fig. 1 is still present.

In other words, in the specific case described above, processing the call according to the existing bearer control processing method will cause redundant transcoding processing and redundant RTP packing and unpacking processing. It will then increase the processing burden of the system and also the latency of the processing, and has a negative influence on the service quality of the transmitted media stream.

In Fig. 2, the media gateway can be a general media gateway (MGW), or an access media gateway (AG), or a residential media gateway which can also be named as Integrated Access Device (IAD). The control entity is the one corresponding to the media gateway, i.e. a softswitch controlling the MGW, AG, or IAD.

Document US-A-2005/083912 discloses a method for transcoding media in a gateway between circuit-switched and packet-switched domains. The gateway supports different transcoding policies, including the decision not to transcode the bearer channel when the codecs from both parties are the same. If the codecs are different then transcoding will be applied.

### Summary of the Invention

The present invention is defined by independent claim 1 with particular embodiments being represented by the corresponding dependent claims.

One of the embodiments provides a method for processing bearer control. For a scenario that a call originated from a TDM bearer based network domain or an intra-office POTS subscriber is routed to an IP bearer based network domain, and then routed from the IP bearer based network domain back to a TDM bearer based network domain or an intra-office POTS subscriber, in the case that the gateways for processing the two segment calls are one same physical entity, the method of the present invention avoids the unnecessary processing of RTP packing and unpacking and possible transcoding for the media stream in the prior art, thereby avoid the additional processing burden of system and the negative influence on QoS of the exchanged media stream due to the additional latency for such unnecessary processing.

According to an aspect of the present invention, a method for processing bearer control is provided. In the method, a first control entity routes a call which is routed from a TDM bearer based network domain or originated by an intra-office POTS subscriber, into an IP bearer based network domain; a second control entity receives the call which is routed back from said IP bearer based network domain and said call is destined to the TDM bearer based network domain or the intra-office POTS subscriber; and when it's determined that a media stream that enters into and exits from said IP bearer based network domain is exchanged on the same media gateway, the first and the second control entities perform a media negotiation during the SIP session to select a same media codec type as the one used on TDM circuits or subscriber lines at two sides, and control a corresponding media gateway to transmit the media stream according to said selected media codec type.

The method further includes step of locating the first control entity and the second control entity within a same physical entity, and configuring in advance with IP addresses that can be used by all the media gateways managed by the control entities.

The second control entity determines whether the media stream which enters into and exits from the IP bearer based network domain is exchanged on the same physical media gateway, according to the originating side IP address of the exchanged media stream transmitted during the negotiation of session description protocol (SDP) and the media gateway which is selected for the call by the second control entity.

Session related information is carried in the call routed by the first control entity.

The second control entity determines whether the media stream that enters into and exits from the IP bearer based network domain is exchanged on the same media gateway according to said session related information.

The session related information is concrete information correlated with bearer control of the call segment from the TDM bearer based network or the intra-office POTS subscriber to the IP bearer based network; or the session related information is session index information, and according to the index information, the second control entity determining whether it is located within the same physical entity as the first control entity, locating a call record of the call segment from the TDM bearer based network or the intra-office POTS subscriber to the IP bearer network, which is stored in the first control entity, and obtaining the concrete information correlated with the bearer control of the call segment from the TDM bearer based network or the intra-office POTS subscriber to the IP bearer network.

The session related information also can be carried in a specific head field of a SIP message, or a SIP message body, or a specific line in the SDP, or an expanded line in the SDP.

An intermediate network element in the IP bearer based network transmits the session related information transparently.

The first control entity takes the media codec type used at the first control entity's TDM circuit or subscriber line as one of options in an offer SDP description. The second control entity selects the media codec type in an answer SDP description responded to the first control entity.

The second control entity refuses all the options in the offer SDP description which is provided by said first control entity, and provides the media codec type used in the TDM circuit or subscriber line side in the call segment from the IP bearer based network domain to the TDM bearer based network domain or the intra-office POTS subscriber in a new offer SDP description. The first control entity selects the media codec type in an answer SDP description responded to the second control entity.

The second control entity carries an additional indication in the new offer SDP description to indicate the first control entity to accept the offer codec type unconditionally; and the first control entity accepts the offer codec type unconditionally according to the indication.

The IP bearer based network domain is an IMS network domain, the media gateway is an IMS media gateway (IM-MGW), and the control entity is an media gateway control function (MGCF) for controlling the IMS media gateway; or the media gateway is a general media gateway (MGW), or an access media gateway (AG), or a residential media gateway which can also be named as Integrated Access Device (IAD), the control entity is a softswitch for controlling the MGW, or AG, or IAD, and the IP bearer based network domain is a softswitch network domain based on IP bearer which is another softswitch or an application server connected to the control entity with an IP bearer.

According to another aspect of the present invention, a method for processing bearer control is provided. In the method, a first control entity routes a call which is routed from a TDM bearer based network domain or originated by an intra-office POTS subscriber, into an IP bearer based network domain, and carries a session related information in a sent SIP message; a second control entity receives the call which is routed back from said IP bearer based network domain, said call is destined to a TDM bearer based network domain or an intra-office POTS subscriber; when determining that a media stream that enters into and exits from said IP bearer carrier network domain is exchanged on the same media gateway according to the session related information, the first control entity and/or the second control entity control the media gateway to directly connect TDM circuit ports or subscriber line ports at two sides to transmit the media stream.

The session related information is concrete information correlated with a bearer control of the call segment from the TDM bearer based network or the intra-office POTS subscriber to the IP bearer based network, which includes at least one of an identifier of an originating side media gateway, an identifier of the first control entity corresponding to the originating side media gateway, and a context identifier, and/or a termination identifier.

The method further includes step of locating the first control entity and the second control entity within a same physical entity and controlling a same physical media gateway; or locating the first control entity and the second control entity in two independent physical control entities, and respectively controlling two different logical media gateways which are located within a same physical media gateway.

The session related information can also be session index information; and according to the index information, the second control entity locates a call record of the call segment from the TDM bearer network or the intra-office POTS subscriber to the IP bearer network, which is stored in the first control entity, and obtaining the concrete information correlated with the bearer control of the call segment from the TDM bearer based network or the intra-office POTS subscriber to the IP bearer network, where the information includes at least one of an identifier of an originating side media gateway, a context identifier, and a termination identifier.

The session related information also can be carried in a specific head field of a SIP message, or a SIP message body, or a specific line in the SDP, or an expanded line in the SDP, to transmit the information to the second control entity.

An intermediate network element in the IP bearer based network transmits the session related information transparently.

The first and the second control entity select a same media codec type as the one used in the TDM circuit or subscriber line at two sides by performing the media negotiation during the SIP session.

The first control entity takes the media codec type used in the native side's TDM circuit or subscriber line as one of options in an offer SDP description; and the second control entity selects the media codec type in an answer SDP description responded o the first control entity.

The second control entity refuses all the options in the offer SDP description provided by said first control entity, and provides the media codec type used in the TDM circuit or subscriber line side in the call segment from the IP bearer based network domain to the TDM bearer based network domain or the intra-office POTS subscriber in a new offer SDP description; and the first control entity selects the media codec type in an answer SDP description responded to said second control entity.

The second control entity carries an additional indication in the new offer SDP description to indicate the first control entity to accept the offer codec type unconditionally; and the first control entity accepts the offer codec type unconditionally according to the indication.

The IP bearer based network domain is an IMS network domain, the media gateway is an IMS media gateway (IM-MGW), and the control entity is an media gateway control function (MGCF) for controlling the IMS media gateway; or the media gateway is a general media gateway (MGW), or an access media gateway (AG), or a residential media gateway (IAD), the control entity is a softswitch for controlling the MGW, or AG, or IAD, and the IP bearer based network domain is a softswitch network domain based on IP bearer which is another softswitch or an application server connected to the control entity with an IP bearer.

In the present invention, for the scenario that a call originated from a TDM bearer based network domain or an intra-office POTS subscriber is routed to an IP bearer based network domain, and then routed from the IP bearer based network domain back to a TDM bearer based network domain or an intra-office POTS subscriber, when the control entities of the media gateways determine that the media gateways for processing the two segment calls are the same physical entity, the optimization processing is performed. In this way, unnecessary processing of RTP packing and unpacking and possible transcoding are avoided, accordingly, the additional processing burden of system and the negative influence on QoS of the exchanged media stream due to the additional latency for such unnecessary processing is avoided, and the utilization efficiency of the network resource and the service experience of the subscribers are improved.

### Brief Description of the Drawings

Fig. 1 is a schematic diagram showing a scenario that a call is routed from a TDM bearer based network domain to an IP bearer based network domain, and then routed from the IP bearer based network domain back to the TDM bearer based network domain by taking the call scenario CS→IMS→CS as an example;
Fig. 2 is a schematic diagram showing a call scenario that a call originated from a TDM bearer based network domain or an intra-office POTS subscriber is received by a softswitch (A), then routed to and processed by another softswitch or an AS connected with IP bearer, and subsequently routed to a TDM bearer based network domain or an intra-office POTS subscriber by softswitch (B);
Fig. 3 is a flowchart illustrating a procedure for avoiding redundant transcoding by performing session negotiation;
Fig. 4 and 5 are flowcharts illustrating a procedure for resolving the problems of redundant transcoding, RTP packing and unpacking by adding session correlated information.

### Detailed Description of the Invention

In a TDM bearer based network domain or an intra-office POTS subscriber to an IP bearer based network domain, and then routed from the IP bearer based network to a TDM bearer based network domain or an intra-office POTS subscriber scenario (CS→IMS→CS scenario), when a control entity of a media gateway receives a call which is routed back from the IP bearer based network domain and destined to a TDM bearer based network domain or an intra-office POTS subscriber, if it is determined that the media stream is finally exchanged within the same physical media gateway, an optimization processing is performed as described in the following text in order to avoid the redundant processing of transcoding, RTP packing and unpacking for the media stream.

The optimization processing may be a processing that the control entities select the same media codec type as that used in the TDM circuit or the Subscriber Line at two sides by performing media negotiation in a SIP session between the control entities, and control the media gateway to transmit the media stream according to the media codec type so as to avoid the possible transcoding processing, or a processing that the control entity controls the media gateway to directly connect the TDM circuit ports or the subscriber line ports at two sides to transmit the media stream, so as to avoid the redundant processing of RTP packing and unpacking and the possible transcoding, or the combination of above two processing.

The CS→IMS→CS scenario or similar scenario correlated, refers to that, a call is routed from a TDM bearer based network domain or an intra-office POTS subscriber to an IP bearer based network domain, and then routed from the IP bearer based network to a TDM bearer based network domain or an intra-office POTS subscriber. In detail, that is, when a CS and IMS are interworking, CS-IMS interworking gateway MGCF/IM-MGW (A) performs interworking for a call from a TDM bearer based CS domain and routes it to a relevant IP bearer based IMS node, and after IMS processing, CS-IMS interworking gateway MGCF/IM-MGW(B) performs interworking for the call and routes it to a TDM bearer based CS domain; or in a network including a softswitch networking, softswitch (A) routes a received call routed from a TDM bearer based network domain or originated by an intra-office POTS subscriber to a relevant node of the IP bearer based network domain, and after the call is processed by the relevant node of the IP bearer based network domain, softswitch (B) routes the call back to the TDM bearer based network domain or the intra-office POTS subscriber.

The scenario includes four cases shown as follows: a TDM bearer based network domain→an IP bearer based network domain→a TDM bearer based network domain, or a POTS subscriber→an IP bearer based network domain→a POTS subscriber, or a TDM bearer based network domain→an IP bearer based network domain→a POTS subscriber, or a POTS subscriber→an IP bearer based network domain→a TDM bearer based network domain. At the same time, in the case of a TDM bearer based network domain→an IP bearer based network domain →a TDM bearer based network domain, the two TDM bearer based network domains are not required to be the same one; and in the case of a POTS subscriber →an IP bearer based network domain→a POTS subscriber, the POTS subscribers can not be the same one.

The media gateway may be an IMS media gateway (IM-MGW), a general media gateway (MGW), an access media gateway (AG) or a residential media gateway which can also be named as Integrated Access Device (IAD); and the control entity is the control entity controlling the media gateways described above respectively, i.e. the Media Gateway Control Function (MGCF) controlling the IMS media gateway, or the softswitch controlling the MGW, AG, or IAD.

The basis according to which the control entity determines that the media stream is finally exchanged within a same physical media gateway has two types as follows:
The first kind of the basis is the IP addresses of the exchanged media stream, which are transmitted during the negotiation of SDP between both sides. In this case, if it is determined that the media stream is finally exchanged within a same physical media gateway, the two control entities must be also located within the same physical entity.

The detailed method is as follows: On a control entity of the media gateway, the IP addresses that may be used by all the media gateways managed by the physical control entity are preset, and the IP addresses can be used to distinguish valid IP nodes within the range of the present network effectively. In this way, when the two logical control entities A and B described above are located within the same physical control entity, the second control entity, i.e. the MGCF (B) in Fig. 1 or the softswitch (B) in Fig. 2, can determine that the media stream that enters into or exits from the IP bearer based network domain is finally exchanged within the same physical media gateway according to the two sides' IP addresses of the exchanged media stream, which are transmitted during the SDP (Session Description Protocol) negotiation between two sides' control entities and with reference to the preset IP addresses which can be used by all the media gateways managed by the second control entity, specifically, according to the IP address of the source media gateway of the exchanged media stream which is transmitted during the negotiation of SDP and the IP address of the media gateway selected by the second control entity for the present call.

The second kind of basis is the first control entity, i.e. the MGCF(A) in Fig. 1 or the softswitch (A) in Fig. 2, which processes a call from the TDM bearer based network domain or an intra-office POTS subscriber to an IP bearer based network domain. In this case, the session related information may be added into the SIP message.

The session related information may be concrete information correlated with the bearer control of the call segment from the TDM bearer based network domain or the intra-office POTS subscriber to the IP bearer based network domain including a corresponding media gateway identifier, or session index information according to which the concrete information correlated with the bearer control of the call segment from the TDM bearer based network domain or the intra-office POTS subscriber to the IP bearer based network domain can be located.

The second control entity locates the concrete information according to the received session index information. In this way, the second entity, i.e. MGCF (B) in Fig. 1 or the softswitch (B) in Fig. 2, for processing the call segment from IP bearer based network domain to the TDM bearer based network domain or the intra-office POTS subscriber can determine that the media stream that enters into or exits from the IP bearer based network domain is finally exchanged within the same media gateway according to the session related information.

The session related information can be carried by a specific head field of a SIP message, such as the head field 'Via' representing the path passed by the message. Also it can be carried by the SIP message body or by an expanded line in the SDP. Also it can be carried by a specific line in the SDP, such as the 'o (owner/creator and session identifier)' line identifying the owner, the creator, and the session identifier, or the 'i (session information)' line identifying the session information.

In addition, while the session related information is carried in the SIP message, the intermediate network entity in the IP bearer based network domain determines not to process the information according to the specific head field of the SIP message, the concrete content of the message body, the specific line in the SDP or its content (the processing includes modifying, intercepting, authorization checking, refusing the service request, and so on), in another word, the intermediate network entity transparently transmits the session related information to ensure that the second control entity can receive the session related information, and thus determine whether the processed call from the IP bearer based network domain to the TDM bearer based network domain or the intra-office POTS subscriber belongs to the second segment of the two segments' call scenario of the TDM bearer based network domain/the intra-office POTS subscriber→the IP bearer based network domain→the TDM bearer based network domain/the intra-office POTS subscriber, and whether the media stream is finally exchanged within the same physical gateway.

When the second control entity determines that the processed call belongs to the second segment of the two segments' call scenario of the TDM bearer based network domain/the intra-office POTS subscriber→the IP bearer based network domain→the TDM bearer based network domain/the intra-office POTS subscriber, and the media stream is finally exchanged within the same physical gateway, the control entities select the same codec as the one used in TDM circuits or subscriber lines at two sides by performing a negotiation of SDP in the SIP session, which can be achieved by any one of the following methods:
1) The first control entity at the originating side takes the codec which is used in the TDM circuit or subscriber line as one of the options in the offer SDP description it provided, and the second control entity at the terminating side selects the codec in an answer SDP description it responded.
2) When the first control entity at the originating side does not take the codec which is used in the TDM circuit or subscriber line as one of the options in the offer SDP description it provided, the second control entity at the terminating side refuses all options provided by the first control entity in the answer SDP description it responded, and takes the codec which used in the TDM circuit or subscriber line as the option by providing a new offer SDP description, then the first control entity at the originating side selects the codec in an answer SDP description it responded. Further, the second control entity at the terminating side may attach an additional indication to the provided new SDP description so as to indicate the first control entity to unconditionally accept the provided codec when receiving it.

Let us take the scenario of CS→IMS→CS as an example, the detailed descriptions will be made hereinafter.

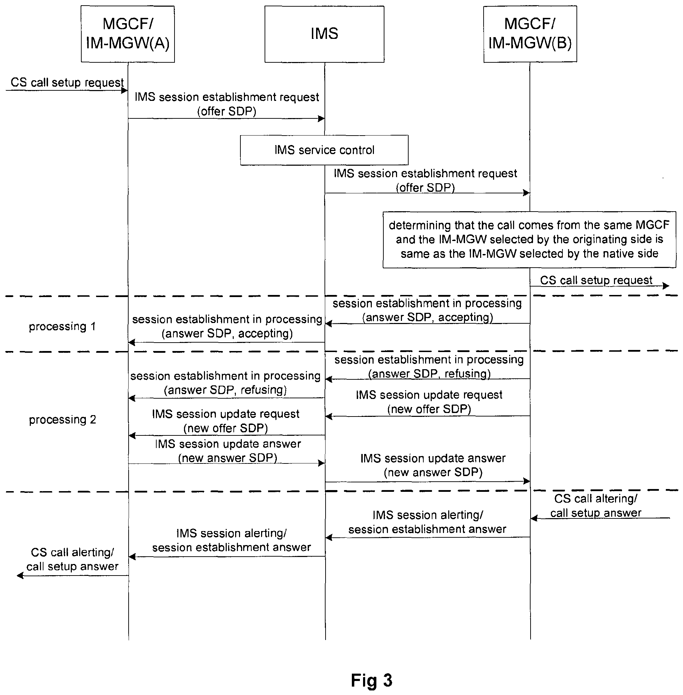

As shown in Fig.3 (and with reference to Fig.1), in the case of that no additional information is transmitted, the procedure of the second control entity , i.e. MGCF(B), making a determination according to the existing information and avoiding the processing of transcoding by performing the session negotiation is as follows:
Step101. When receiving a call setup request from the TDM bearer based CS domain, the MGCF (A) (the first control entity)at the originating side sends INVITE to the IP bearer based IMS domain. Said INVITE is an IMS session establishment request with offer SDP. The SDP carried in the message still is the information specified by the standard, i.e. the originating side offer SDP describing IP address information (originating side IP address) of the IP port used for the IMS side of the call segment of CS→IMS, and the selected codec.
Step102. After processed by the IMS domain, according to the service and the route control, the session is routed to the terminating side MGCF (B). After receiving the INVITE request from the IMS domain, according to the originating side IP address in the originating side's offer SDP and the configured IP address of the IM-MGWs it manages, the MGCF (B) determines whether the call comes from the same MGCF and the IM-MGW selected by the MGCF (A) (the originating side) is the same as the IM-MGW selected by the MGCF (B) which can arrive at the called party side, i.e. IM-MGW(A)=IM-MGW(B).

In this embodiment, that is, the IMS domain routes the session back to the originating side MGCF, in another word, here the terminating side MGCF is same as the originating side MGCF, i.e. MGCF(A)=MGCF(B).

Step103. According to the above determination, the MGCF (B) performs the Negotiation of SDP during the SIP session with the MGCF (A) and selects the same codec as that of the CS call for the IMS session.

The above Negotiation and selecting action can be achieved by one of the following different methods.

The first method is that: the offer SDP description sent from the originating side provides several optional codec types including the codec which is the same as the one used in the call from the CS domain; the MGCF (B) responds with an answer SDP in a SIP response message to select the codec used in the call from the CS domain.

The second method is that: the codec which is the same as the one used in the call from the CS domain is not included in the offer SDP description sent from the originating side; the MGCF (B) responds with an answer SDP in a SIP response message to refuse all of options provided in the offer SDP, and provides a new offer SDP including the codec used in the call from the CS domain to initiate a negotiation of SDP once again; then the MGCF (A) responds with an answer SDP to accept the new offer SDP, and selects the codec used in the call from the CS domain. Here, in order to further ensure the success of the second negotiation, the MGCF (B) may carry an additional indication in the new offer SDP description, which tells the MGCF (A) to use the provided codec unconditionally.

Step104. When the called party rings or answers the incoming call to require to establish the media channel, the MGCF (B) connects the two IP ports respectively allocated for the segment of CS→IMS and the segment of IMS→CS on the IM-MGW by a gateway control protocol.

In this embodiment, the possible transcoding can be avoided by selecting the same codec as the one used in the call from the CS domain via the negotiation of SDP.

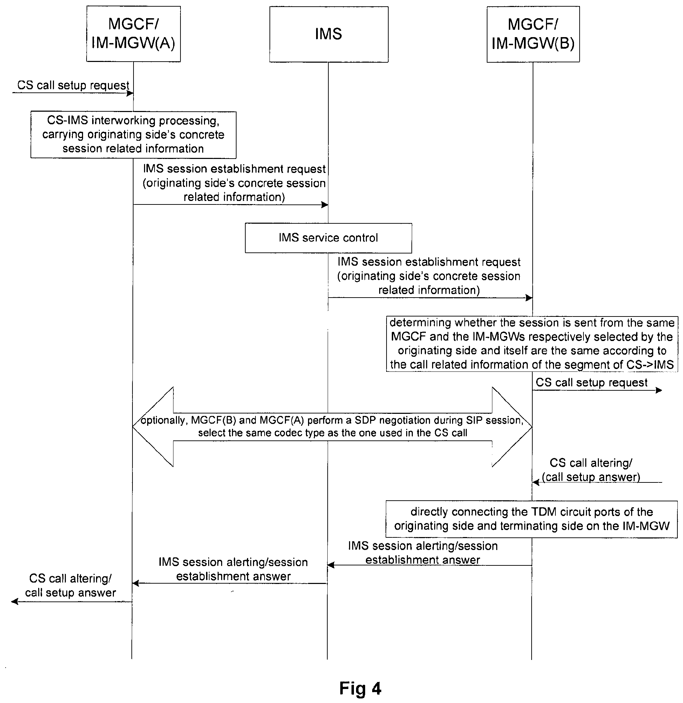

Let us see the another embodiment, as shown in Fig 4 (and with reference to Fig. 1). In this embodiment, it is different from the above one in that the session related information is added to be transmitted, which is correlated with the call segment CS→IMS. the MGCF (B) makes a judgment according to the added information and performs the processing for optimizing bearer control. The procedure is as follows in detail:
Step201. When receiving the call setup request from the TDM bearer based CS domain, the MGCF (A) in the originating side (the first control entity) sends INVITE to the IP bearer based IMS domain. The concrete information correlated with the bearer control of the call segment from the TDM bearer based network domain or the intra-office POTS subscriber to the IP bearer based network domain is added in the carried SDP, and the concrete information includes corresponding media gateway identifier (the identifier of the originating side MGCF, the gateway identifier of the originating side IM-MGW, the identifier of the context, and the identifier of the terminations) correlated with the bearer control of the originating side.
Step202. After processed by the IMS domain, the session is routed to the MGCF(B)) according to the service and the route control.
Step203. After receiving the INVITE request from the IMS domain, the MGCF (B) determines whether the session is sent from the same MGCF, according to the originating side's session related information carried in the SDP. For example, if the identifier of the originating side MGCF(A) is the same as that of the terminating side MGCF (B), it is determined that the two are the same one, i.e. MGCF (A) =MGCF (B).
Step204. If the MGCF determines that the incoming call is sent from the same MGCF, the MGCF further determines whether the call is originated from a TDM bearer based CS domain and will be routed to a TDM bearer based CS domain, and whether the IM-MGW selected by the originating side and the terminating side is located within the same physical media gateway, by analyzing other originating side's session related information carried in the SDP. If the two answers are both yes, the optimization processing for avoiding the redundant transcoding and RTP packing is initiated, that is, going to step205.
Step205. The MGCF (B) performs the negotiation of SDP during the SIP session with the MGCF (A), and selects the same codec type as the one used in the CS call. Since when establishing the media channel subsequently, the MGCF will control the IM-MGW by the gateway control protocol to directly connect the TDM circuit ports of the originating side and terminating side.

This step is optional in this embodiment and the main intention of it is to keep the codec information processed in the service layer consistent with actual processing, so as to avoid the problems on the service control or on the charging processing which may be introduced due to the inconsistence between the service layer codec information and actual processing.

The concrete processing of step205 is the same as that of the step 204 in the procedure shown in Fig. 3.

Step206. When the called party rings or answers to require to establish the media channel, the MGCF directly connects the TDM circuit ports of the originating side and the terminating side on the IM-MGW by the gateway control protocol, according to the obtained internal IM-MGW parameters i.e. context identifier of the originating side and identifier of the terminating side so as to avoid the packing and unpacking processing.

In the procedure shown in Fig. 4, the added session related information of the originating side is carried in the SDP to avoid being modified by various nodes to a great extent and to ensure the end to end transmission. The same effect can also be achieved by carrying the information in a specific head field or the message body in a SIP message and forbidding the intermediate network elements to modify this information at the same time.

In the above two embodiments, the description is made by taking the case that the MGCF (A) and MGCF (B) are located in the same physical entity as an example. However, since all the information that the optimization processing requires is carried in the SIP message between MGCF (A) and MGCF (B), it can be seen that MGCF (A) and MGCF (B) may also be two different physical entities respectively controlling two different logic media gateway entities which are located in the same physical entity. In this case, the determination in step 3 described above is not necessary, it is only necessary to determine that the call is originated from a TDM bearer based CS domain, and will be routed to a TDM bearer based CS domain, and the IM-MGWs respectively selected by the originating side and the terminating side are located in the same physical media gateway, the optimization processing for avoiding the redundant transcoding and RTP packing and unpacking can be initiated.

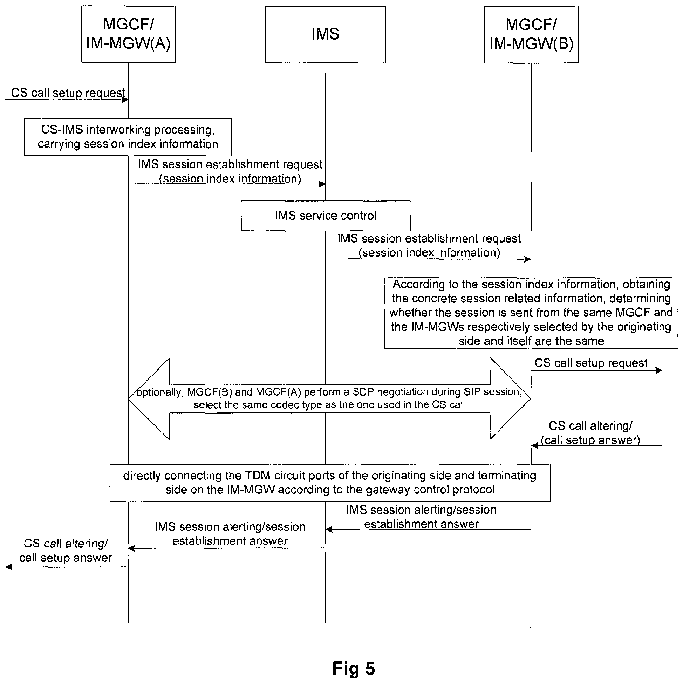

Let us see another embodiment, as shown in Fig. 5, in which an index information is added in the SDP, and the MGCF (B) determines and locates the session related information of the segment of CS→IMS according to the added index information, and therefore performs the optimization processing for the bearer control. It is shown as follows:
Step301. After receiving the call setup request from the TDM bearer based CS domain, the MGCF (A) at the originating side (the first control entity) sends INVITE to the IP bearer based IMS domain, where the information for uniquely identifying the characteristics of the present session segment is included in the carried SDP. For example, o=sessionindex1 2890844526 2890844527 IN IP4 mgcnumber.carrier.com, wherein the "mgcnumber.carrier.com" indicates the originating side MGCF (A) identity and the "sessionindex1" is a transparent parameter, which can be an index used to locate the internal session and the IM-MGW information in this embodiment.
Step302. After processed by the IMS domain, the session is routed to the originating side MGCF (B) according to the service and the route control.
Step303. After receiving the INVITE request from the IMS domain, and according to the SDP information it carried, the MGCF (B) determines whether the session is sent from the same MGCF. In the above example, it is according to the <address> parameter in "o=", i.e. "mgcnumber.carrier.com". If the parameter is the same as the identifier of that of the MGCF (B), it can be determined that the originating side MGCF and the terminating side MGCF are the same one, i.e. MGCF (A) =MGCF (B).

If the MGCF determines that the incoming call is originated from the same MGCF, it can further locates the internal data (i.e. the information correlated with the call segment of CS→IMS) according to the transparent parameter carried in the SDP, i.e. "sessionindex1"in the example, and obtains the information necessary for controlling the gateway, which includes the gateway identifier of the originating side IM-MGW, the context identifier, and the termination identifiers.

Step304. If the MGCF determines, according to the internal information, that the call is originated from a TDM bearer based CS domain and will be routed to a TDM bearer based CS domain, and the IM-MGW selected by the originating side and the terminating side is located within the same physical media gateway, the MGCF initiates the optimization processing for avoiding the redundant transcoding and RTP packing, that is, going to step305.

Step305. The MGCF (B) performs the negotiation of SDP during the SIP session with the MGCF (A), and selects the same codec type as the one used in the CS call.

This step is similar as the above embodiments, and it is optional. The concrete processing is same as that of the step104 in the procedure shown in Fig. 3.

Step306. When the called party rings or answers to require to establish the media channel, the MGCF directly connects the TDM circuit ports of the originating side and the terminating side on the IM-MGW by using the gateway control protocol according to the obtained internal IM-MGW parameters, i.e. context identifier of the originating side and identifier of the terminating side so as to avoid the packing and unpacking processing.

Similarly, in the procedure shown in Fig. 5, the added information for uniquely identifying the characteristics of the present session segment may be carried in the SDP to avoid being modified by various nodes in the IMS network to a large degree and to ensure the end to end transmission. Alternatively, the information may also be carried in the specific head field or the message body, and the intermediate network elements are forbidden to modify this information at the same time, which can achieve the same effect.

Now let us clarify the differences between the above embodiments. It can be seen that, in the procedure shown in Fig. 3, no additional information is added to be transmitted on the session segment of IMS, therefore, the MGCF (B) for processing the call segment of IMS→CS can only perform the optimization processing for avoiding the possible transcoding according to the original information transmitted in the session along with the additional locally configured information (IP addresses of all the IM-MGWs managed by the present MGCF); while in the procedure shown in the Fig. 4 and Fig. 5, the MGCF (A) for processing the call segment of CS→IMS (MGCF at the originating side) adds the session related information in the sent INVITE, such that the MGCF (A) for processing the call segment of CS→IMS and the MGCF (B) for processing the call segment IMS→CS can not only further or directly determine the call scenario according to the added information, but can also obtain the concrete information correlated with the bearer control of the IM-MGW, which includes the identifier of the originating side IM-MGW, the context identifier, the termination identifiers and so on, thus control the IM-MGW to connect the TDM circuits of the originating side and the terminating side, and thereby avoid the packing, unpacking, and transcoding processing.

The main difference between the procedures shown in Fig. 4 and Fig. 5 is that the procedure in which the MGCF (B) obtains the data required for the optimization processing is different. In detail, in the procedure shown in Fig. 4, the added session related information may be the concrete information correlated with the bearer control at the originating side, such as the identifier of the MGCF and IM-MGW, the context identifier, the termination identifiers and so on. According to the added information, the MGCF (B) and/or the MGCF (A) directly control IM-MGW to perform the optimization processing. In the procedure shown in Fig.5, the added session related information may be session index information. According to the session index information, the MGCF (B) locates the data reserved by the MGCF (A)for the processing of the CS-IMS call segment, the MGCF being located in the same physical entity with the MGCF (B), so that the MGCF (B) and/or the MGCF (A) further control(s) the IM-MGW and perform(s) the optimization processing according to the located information.

On the other hand, since the information required for the optimization processing is directly carried in the SIP messages in Fig. 4, while in Fig. 5, it needs to match the data reserved on the MGCF (A) in processing of the originating side call according to the index information. Therefore the method shown in Fig. 4 is suitable not only for the case where the MGCF (A) and the MGCF (B) are located in the same physical entity, but also for the case where the MGCF (A) and the MGCF (B) are located in different physical entities and respectively control two different logical media gateway entities located in the same physical entity, while the method shown in Fig. 5 is only suitable for the case where the MGCF (A) and the MGCF (B) are located in the same physical entity.

In Fig.3, Fig.4 and Fig.5, the description is made by taking the call scenario of CS→IMS→CS and the media stream being actually exchanged within the same IM-MGW as an example. However, as described in the background, the soft switch also employs an architecture that the bearer control is separated from the call and service control, meanwhile, the soft switch controls the managed gateways including the general media gateway (MGW) the access media gateway (AG) and the residential media gateway which can also be named as Integrated Access Device (IAD) through the gateway control protocol, and the SIP is also used as the session control protocol among the soft switches, that is to say, the soft switch also supports the SIP media negotiation procedure and the control processing and ability of the gateway control protocol. Therefore, the present invention may also be suitable for the case that the same call is successively processed by a soft switch twice and eventually the media stream is exchanged within the same media gateway (including the general media gateway, AG, and IAD) managed by the softswitch. At this time, the IMS may be another softswitch or application server connected the softswitch with IP bearer, the MGCF may be a softswitch, and the IM-MGW may be the general media gateway MGW, or the access media gateway AG, or the residential media gateway which can also be named as integrated access device IAD which are managed by the softswitch. The procedure thereof is similar to the procedure described above, and is omitted here.

## Claims

1. A network system for processing bearer control, comprising: a media gateway, a first control entity and a second control entity, wherein the first control entity is adapted to route a call which is routed from a Time Division Multiplexing, TDM, bearer based network domain or originated by an intra-office Plain Ordinary Telephone Service, POTS, subscriber to an internet protocol, IP, bearer based network domain; the second control entity is adapted to route the call which is routed back from said IP bearer based network domain, wherein the call is destined to a TDM bearer based network domain or an intra-office POTS subscriber; the second control entity is adapted to determine, from session related information carried in a SIP message sent by the first control entity, that a media stream that enters into and exists from the IP bearer based network domain is exchanged on a same media gateway, and the first control entity and/or the second control entity is adapted to control the media gateway to directly connect TDM circuit ports or subscriber line ports at two sides to transmit the media stream.

2. The network system according to claim 1, wherein session related information is carried in an SIP message sent by the first control entity; and
wherein the determining that the media stream that enters into and exists from the IP bearer based network domain is exchanged on the same media gateway comprises: the second control entity adapted to determine that the media stream that enters into and exists from the IP bearer based network domain is exchanged on the same media gateway according to the session related information.

3. The network system according to claim 2, wherein,
the session related information is concrete information correlated with a bearer control of the call segment from the TDM bearer based network or the intra-office POTS subscriber to the IP bearer based network, which comprises at least one of an identifier of an originating side media gateway, an identifier of the first control entity corresponding to the originating side media gateway, and a context identifier, and/or a termination identifier.

4. The network system according to claim 3, wherein,
the first control entity and the second control entity are located within a same physical entity and control a same physical media gateway; or
the first control entity and the second control entity are located in two independent physical control entities, and respectively control two different logical media gateways which are located within a same physical media gateway.

5. The network system according to claim 2, wherein,
the session related information is session index information; and the method further comprising:
according to the index information, the second control entity is adapted to locate a call record of the call segment from the TDM bearer network or the intra-office POTS subscriber to the IP bearer network, which is stored in the first control entity, and
the second control entity adapted to obtain the concrete information correlated with the bearer control of the call segment from the TDM bearer based network or the intra-office POTS subscriber to the IP bearer network, wherein the information comprises at least one of an identifier of an originating side media gateway, a context identifier, and a termination identifier.

6. The network system according to claim 2, wherein,
the session related information is carried in a specific head field of a SIP message, or a SIP message body, or a specific line in the SDP, or an expanded line in the SDP, to transmit the information to the second control entity.

7. The network system according to claim 6, wherein the network system further comprises an intermediate network element in the IP bearer based network, the intermediate network element adapted to transmit the session related information transparently.

8. The network system according to claim 1 or 2, wherein the first control entity and the second control entity are adapted to select a same media codec type as the one used in the TDM circuit or subscriber line at two sides by performing the media negotiation during the SIP session.

9. The network system according to claim 8, wherein the first control entity is adapted to take the media codec type used in the native side's TDM circuit or subscriber line as one of options in an offer SDP description; the second control entity is adapted to select the media codec type in an answer SDP description responded to the first control entity.

10. The network system according to claim 8, wherein the second control entity is adapted to refuse all the options in the offer SDP description provided; and the second control entity is adapted to provide the media codec type used in the TDM circuit or subscriber line side in the call segment from the IP bearer based network domain to the TDM bearer based network domain or the intra-office POTS subscriber in a new offer SDP description; the first control entity adapted to select the media codec type in an answer SDP description responded to said second control entity.

11. The network system according to claim 10, wherein an additional indication is carried in the new offer SDP description provided by the second control entity to indicate the first control entity to accept the offer codec type unconditionally; and the first control entity is adapted to accept the offer codec type unconditionally according to the indication.

12. The network system according to claim 1 or 2, wherein,
the IP bearer based network domain is an IMS network domain, the media gateway is an IMS media gateway (IM-MGW), and the control entity is an media gateway control function (MGCF) for controlling the IMS media gateway; or
the media gateway is a general media gateway (MGW), or an access media gateway (AG), or a residential media gateway (IAD), the control entity is a softswitch for controlling the MGW, or AG, or IAD, and the IP bearer based network domain is a softswitch network domain based on IP bearer which is another softswitch or an application server connected to the control entity with an IP bearer.

## Patentansprüche

1. Netzsystem zur Verarbeitung von Trägersteuerung, umfassend:
ein Medien-Gateway, eine erste Steuerentität und eine zweite Steuerentität, wobei die erste Steuerentität ausgelegt ist zum Routen eines Anrufs, der aus einer Netzdomäne auf Zeitmultiplex- bzw. TDM-Trägerbasis geroutet oder durch einen amtsinternen Teilnehmer des einfachen herkömmlichen Fernsprechsystems POTS eingeleitet wird, zu einer Netzdomäne auf Internetprotokoll- bzw. IP-Trägerbasis;
die zweite Steuerentität ausgelegt ist zum Routen des Anrufs, der von der Netzdomäne auf IP-Trägerbasis zurückgeroutet wird, wobei der Anruf für eine Netzdomäne auf TDM-Trägerbasis oder einen amtsinternen POTS-Teilnehmer bestimmt ist;
die zweite Steuerentität dafür ausgelegt ist, aus in einer durch die erste Steuerentität gesendeten SIP-Nachricht geführten sitzungsbezogenen Informationen zu bestimmen, dass ein Medienstrom, der in die Netzdomäne auf IP-Trägerbasis eintritt und diese verlässt, auf einem selben Medien-Gateway vermittelt wird, und
die erste Steuerentität und/oder die zweite Steuerentität ausgelegt ist zum Steuern des Medien-Gateway zum direkten Verbinden von TDM-Leitungsports oder Teilnehmeranschlussports auf zwei Seiten zum Senden des Medienstroms.

2. Netzsystem nach Anspruch 1, wobei sitzungsbezogene Informationen in einer durch die erste Steuerentität gesendeten SIP-Nachricht geführt werden; und
wobei das Bestimmen, dass der Medienstrom, der in die Netzdomäne auf IP-Trägerbasis eintritt und diese verlässt, auf demselben Medien-Gateway vermittelt wird, Folgendes umfasst:
die zweite Steuerentität, ausgelegt zum Bestimmen, dass der Medien-Strom, der in die Netzdomäne auf IP-Trägerbasis eintritt und diese verlässt, auf demselben Medien-Gateway vermittelt wird, gemäß den sitzungsbezogenen Informationen.

3. Netzsystem nach Anspruch 2, wobei
die sitzungsbezogenen Informationen konkrete Informationen sind, die mit einer Trägersteuerung des Anrufsegments von dem Netz auf TDM-Trägerbasis oder dem amtsinternen POTS-Teilnehmer zu dem Netz auf IP-Trägerbasis korreliert sind, die mindestens eine einer Kennung eines ursprungsseitigen Medien-Gateway, einer Kennung der dem ursprungsseitigen Medien-Gateway entsprechenden ersten Steuerentität und einer Kontextkennung und/oder einer Abschlusskennung umfasst.

4. Netzsystem nach Anspruch 3, wobei
sich die erste Steuerentität und die zweite Steuerentität in einer selben physischen Entität befinden und ein selbes physisches Medien-Gateway steuern; oder
sich die erste Steuerentität und die zweite Steuerentität in zwei unabhängigen physischen Steuerentitäten befinden und jeweils zwei verschiedene logische Medien-Gateways steuern, die sich in einem selben physischen Medien-Gateway befinden.

5. Netzsystem nach Anspruch 2, wobei
die sitzungsbezogenen Informationen Sitzungsindexinformationen sind; und das Verfahren ferner Folgendes umfasst:
gemäß den Indexinformationen ist die zweite Steuerentität ausgelegt zum Finden eines Anrufdatensatzes des Anrufsegments von dem TDM-Trägernetz oder dem amtsinternen POTS-Teilnehmer zu dem IP-Trägernetz, der in der ersten Steuerentität gespeichert ist, und
die zweite Steuerentität ist ausgelegt zum Erhalten der mit der Trägersteuerung des Anrufsegments von dem Netz auf TDM-Trägerbasis oder dem amtsinternen POTS-Teilnehmer zu dem IP-Trägernetz korrelierten konkreten Informationen, wobei die Informationen mindestens eine einer Kennung eines ursprungsseitigen Medien-Gateway, einer Kontextkennung und einer Abschlusskennung umfassen.

6. Netzsystem nach Anspruch 2, wobei
die sitzungsbezogenen Informationen in einem spezifischen Kopffeld einer SIP-Nachricht oder einem SIP-Nachrichtenhauptteil oder einer spezifischen Zeile im SDP oder einer erweiterten Zeile im SDP geführt werden, um die Informationen zur zweiten Steuerentität zu senden.

7. Netzsystem nach Anspruch 6, wobei das Netzsystem ferner ein Zwischen-Netzelement in dem Netz auf IP-Trägerbasis umfasst, wobei das Zwischen-Netzelement ausgelegt ist zum transparenten Senden der sitzungsbezogenen Informationen.

8. Netzsystem nach Anspruch 1 oder 2, wobei
die erste Steuerentität und die zweite Steuerentität ausgelegt sind zum Auswählen eines selben Medien-Codectyps wie demjenigen, der in der TDM-Leitung oder dem Teilnehmeranschluss auf zwei Seiten verwendet wird, indem die Medienaushandlung während der SIP-Sitzung durchgeführt wird.

9. Netzsystem nach Anspruch 8, wobei die erste Steuerentität ausgelegt ist zum Nehmen des in der TDM-Leitung oder dem Teilnehmeranschluss der nativen Seite verwendeten Medien-Codectyps als eine von Optionen in einer Angebots-SDP-Beschreibung;
die zweite Steuerentität ausgelegt ist zum Auswählen des Medien-Codectyps in einer der ersten Steuerentität geantworteten Antwort-SDP-Beschreibung.

10. Netzsystem nach Anspruch 8, wobei die zweite Steuerentität ausgelegt ist zum Verweigern aller Optionen in der bereitgestellten Angebots-SDP-Beschreibung;
und die zweite Steuerentität ausgelegt ist zum Bereitstellen des in der TDM-Leitungs- oder Teilnehmeranschlussseite in dem Anrufsegment von der Netzdomäne auf IP-Trägerbasis zu der Netzdomäne auf TDM-Trägerbasis oder dem amtsinternen POTS-Teilnehmer verwendeten Medien-Codectyps in einer neuen Angebots-SDP-Beschreibung;
die erste Steuerentität ausgelegt ist zum Auswählen des Medien-Codectyps in einer der zweiten Steuerentität geantworteten Antwort-SDP-Beschreibung.

11. Netzsystem nach Anspruch 10, wobei eine zusätzliche Angabe in der durch die zweite Steuerentität bereitgestellten neuen Angebots-SDP-Beschreibung geführt wird, um der ersten Steuerentität anzugeben, den Angebots-Codectyp bedingungslos anzunehmen; und
die erste Steuerentität ausgelegt ist zum bedingungslosen Annehmen des Angebots-Codectyps gemäß der Angabe.

12. Netzsystem nach Anspruch 1 oder 2, wobei
die Netzdomäne auf IP-Trägerbasis eine IMS-Netzdomäne ist, das Medien-Gateway ein IMS-Medien-Gateway (IM-MGW) ist und die Steuerentität eine Medien-Gateway-Steuerfunktion (MGCF) zum Steuern des IMS-Medien-Gateways ist; oder das Medien-Gateway ein allgemeines Medien-Gateway (MGW) oder ein Zugangs-Medien-Gateway (AG) oder ein Wohnungs-Medien-Gateway (IAD) ist, die Steuerentität ein Softswitch zum Steuern des MGW oder AG oder IAD ist und die Netzdomäne auf IP-Trägerbasis eine Softswitch-Netzdomäne auf Basis des IP-Trägers ist, die ein anderer Softswitch oder ein Anwendungsserver ist, der mit der Steuerentität mit einem IP-Träger verbunden ist.

## Revendications

1. Système de réseau permettant de traiter un contrôle de support, comprenant : une passerelle multimédia, une première entité de commande et une deuxième entité de commande, dans lequel la première entité de commande est conçue pour router un appel qui est routé à partir d'un domaine de réseau basé sur un support de multiplexage par répartition temporelle, TDM, ou provenant d'un abonné au service téléphonique ordinaire, POTS, local vers un domaine de réseau basé sur un support de protocole Internet, IP ;
la deuxième entité de commande est conçue pour router l'appel qui est routé en retour à partir dudit domaine de réseau basé sur un support IP, l'appel étant destiné à un domaine de réseau basé sur un support TDM ou à un abonné du POTS local ;
la deuxième entité de commande est conçue pour déterminer, à partir d'informations relatives à une session contenues dans un message SIP envoyé par la première entité de commande, qu'un flux multimédia qui entre et sort dans le/à partir du domaine de réseau basé sur un support IP est échangé sur une même passerelle multimédia, et
la première entité de commande et/ou la deuxième entité de commande sont conçues pour amener la passerelle multimédia à connecter directement des ports de circuit TDM ou des ports de ligne d'abonné des deux côtés pour transmettre le flux multimédia.

2. Système de réseau selon la revendication 1, dans lequel des informations relatives à la session sont contenues dans un message SIP envoyé par la première entité de commande ; et
l'étape de détermination que le flux multimédia qui entre et sort dans le/à partir du domaine de réseau basé sur un support IP est échangé sur la même passerelle multimédia comprenant :
la deuxième entité de commande est conçue pour déterminer que le flux multimédia qui entre et sort dans le/à partir du domaine de réseau basé sur un support IP est échangé sur la même passerelle multimédia selon les informations relatives à la session.

3. Système de réseau selon la revendication 2, dans lequel :
les informations relatives à la session sont des informations concrètes corrélées à un contrôle de support du segment d'appel depuis le réseau basé sur un support TDM ou l'abonné du POTS local vers le réseau basé sur un support IP, qui comportent au moins un élément parmi un identifiant d'une passerelle multimédia côté émetteur, un identifiant de la première entité de commande correspondant à la passerelle multimédia côté émetteur, et un identifiant de contexte, et/ou un identifiant de fin.

4. Système de réseau selon la revendication 3, dans lequel :
la première entité de commande et la deuxième entité de commande sont situées à l'intérieur d'une même entité physique et commandent une même passerelle multimédia physique ; ou
la première entité de commande et la deuxième entité de commande sont situées dans deux entités de commande physiques indépendantes, et commandent respectivement deux passerelles multimédia logiques différentes qui sont situées à l'intérieur d'une même passerelle multimédia physique.

5. Système de réseau selon la revendication 2, dans lequel :
les informations relatives à la session sont des informations d'index de session ; et le procédé comprend en outre :
selon les informations d'index, la deuxième entité de commande est conçue pour localiser un enregistrement d'appel du segment d'appel depuis le réseau de support TDM ou l'abonné POTS local vers le réseau de support IP, qui est stocké dans la première entité de commande, et
la deuxième entité de commande conçue pour obtenir les informations concrètes corrélées au contrôle de support du segment d'appel depuis le réseau basé sur un support TDM ou l'abonné POTS local vers le réseau de support IP, les informations comportant au moins un élément parmi un identifiant d'une passerelle multimédia côté émetteur, un identifiant de contexte, et un identifiant de fin.

6. Système de réseau selon la revendication 2, dans lequel :
les informations relatives à la session sont contenues dans un champ de tête spécifique d'un message SIP, ou un corps de message SIP, ou une ligne spécifique dans le SDP, ou une ligne étendue dans le SDP, pour transmettre les informations à la deuxième entité de commande.

7. Système de réseau selon la revendication 6, le système de réseau comprenant en outre un élément réseau intermédiaire dans le réseau basé sur un support IP, l'élément réseau intermédiaire étant conçu pour transmettre les informations relatives à la session de façon transparente.

8. Système de réseau selon la revendication 1 ou 2, dans lequel :
la première entité de commande et la deuxième entité de commande sont conçues pour sélectionner un même type de codec multimédia que celui utilisé dans le circuit TDM ou la ligne d'abonné des deux côtés en exécutant la négociation multimédia durant la session SIP.

9. Système de réseau selon la revendication 8, dans lequel la première entité de commande est conçue pour prendre le type de codec multimédia utilisé dans le circuit TDM du côté natif ou la ligne d'abonné comme une des options dans une description SDP d'offre ;
la deuxième entité de commande est conçue pour sélectionner le type de codec multimédia dans une description SDP de réponse transmise à la première entité de commande.

10. Système de réseau selon la revendication 8, dans lequel la deuxième entité de commande est conçue pour refuser toutes les options dans la description SDP d'offre fournie ;
et la deuxième entité de commande conçue pour fournir le type de codec multimédia utilisé dans le circuit TDM ou le côté ligne d'abonné dans le segment d'appel depuis le domaine de réseau basé sur un support IP vers le domaine de réseau basé sur un support TDM ou l'abonné POTS local dans une nouvelle description SDP d'offre ;
la première entité de commande est conçue pour sélectionner le type de codec multimédia dans une description SDP de réponse transmise à ladite deuxième entité de commande.

11. Système de réseau selon la revendication 10, dans lequel une indication additionnelle est contenue dans la nouvelle description SDP d'offre fournie par la deuxième entité de commande pour indiquer à la première entité de commande d'accepter le type de codec d'offre inconditionnellement ; et
la première entité de commande est conçue pour accepter le type de codec d'offre inconditionnellement selon l'indication.

12. Système de réseau selon la revendication 1 ou 2, dans lequel :
le domaine de réseau basé sur un support IP est un domaine de réseau IMS, la passerelle multimédia est une passerelle multimédia IMS (IM-MGW), et l'entité de commande est une fonction de commande de passerelle multimédia (MGCF) destinée à commander la passerelle multimédia IMS ; ou
la passerelle multimédia est une passerelle multimédia générale (MGW), ou une passerelle multimédia d'accès (AG), ou une passerelle multimédia résidentielle (IAD), l'entité de commande est un commutateur logiciel destiné à commander le MGW, ou l'AG, ou l'IAD, et le domaine de réseau basé sur un support IP est un domaine de réseau de commutateur logiciel basé sur un support IP qui est un autre commutateur logiciel ou un serveur d'application connecté à l'entité de commande avec un support IP.
